# EUROPEAN PATENT APPLICATION

(11) **EP 4 509 647 A1**
(43) Date of publication of application: **19.02.2025**
(21) Application number: 22895501.9
(22) Date of filing: 09.11.2022
(51) Int. Cl.: D04H 1/4209, B32B 5/02, B60L 50/64, D04H 1/46, H01M 50/204, H01M 50/207, H01M 50/222, H01M 50/231

(54) **INORGANIC FIBER BLANKET, LAMINATE, BATTERY PACK UNIT, AND ELECTRIC MOBILITY**

(30) Priority: 19.11.2021 JP 2021188751
(71) Applicant: MAFTEC Co., Ltd., Tokyo 100-0004 (JP)
(72) Inventor: SHIRAKU, Hideyuki, Tokyo 100-0004 (JP); HATA, Yusaku, Tokyo 100-0004 (JP)
(74) Representative: Hoffmann Eitle
(86) International application number: PCT/JP2022/041693
(87) International publication number: WO 2023/090219

(57) **Abstract**

Provided are an inorganic fiber blanket having excellent flame-shielding properties, a battery pack cover using the inorganic fiber blanket, a battery pack unit using the battery pack cover, and an electric mobility using the battery pack unit. The inorganic fiber blanket is formed of a needle blanket having a basis weight of 700 g/m² or less, and a bulk density of 0.125 g/cm³ or more. The battery pack cover includes this inorganic fiber blanket. The battery pack unit uses this battery pack cover. The electric mobility uses this battery pack unit.

## Description

### Technical Field

The present invention relates to an inorganic fiber blanket, a laminate, a battery pack unit, and an electric mobility.

### Background Art

A battery pack unit used in electric mobility such as an electric vehicle (EV) has a housing and a battery pack disposed within the housing (Patent

Patent Literature 1 describes that the container is made of a laminate in which a non-combustible or flame-retardant fiber layer such as glass fiber is provided on one surface of a synthetic resin plate.

### Citation List

### Patent Literature

Patent Literature 1 :WO2019/044801A1.

### Summary of Invention

### Technical Problem

In battery packs for EVs, the energy density of the battery modules installed in electric vehicles tends to increase in order to extend the driving distance, and requirements for preventing heat generation and the risk of thermal runaway in the batteries are increasing.

In the event that the battery catches fire due to thermal runaway or other reasons, a fire-resistant material with excellent flame-blocking properties is required in the gap between the battery pack and the battery pack cover to slow the spread of the fire to the interior components. However, since the gap between the battery pack and the battery pack cover is limited, the fire-resistant material must be thin.

If it is too thick, there is a risk that either the battery pack or the battery pack cover will be crushed.

On the other hand, if the thickness of the fire-resistant material is made too small, it is not possible to exhibit sufficient flame-blocking properties.

An object of the present invention is to provide an inorganic fiber blanket having excellent flame blocking properties.

Furthermore, the present invention aims to provide a laminate using this inorganic fiber blanket, a battery pack unit having this inorganic fiber blanket, and electric mobility using this battery pack unit.

### Solution to Problem

The inventors have discovered that by devising a needling process, an inorganic fiber blanket with high bulk density can be obtained, and further discovered that an inorganic fiber blanket having a specific bulk density and basis weight can achieve both thickness and flame-blocking performance.

The present invention relates to the following.
[1] An inorganic fiber blanket comprising a needle blanket having a basis weight of 700 g/m² or less and a bulk density of 0.125 g/cm³ or more.
[2] The inorganic fiber blanket described in [1], wherein the needle blanket has needle penetration marks that penetrate from one surface to the other surface and the needle penetration mark density is 35/cm² or less.
[3] An inorganic fiber blanket having a basis weight of 700 g/m² or less and a bulk density of 0.125 g/ cm³ or more, which is not penetrated for 5 minutes in a flame test at a flame temperature of 1000°C and an air jet speed of 100 m/s, using a laminate consisting of the inorganic fiber blanket and an aluminum alloy plate having a thickness of 0.8 mm as a test specimen.
[4] An inorganic fiber blanket described in any one of [1] to [3], having a peel strength of 4.0 N or more as determined by the following method.

### <Method for measuring peel strength>

Measure using a tensile testing machine.

The effective size of the test piece is 50 mm × 75 mm.

A slit is made in the center of the thickness of one end of the 50 mm width side, extending 25 mm in the longitudinal direction.

Both ends formed by the cut are gripped and attached to a tensile tester, and the specimen is pulled at a speed of 100 mm/min. The maximum load is defined as the peel strength.

[5] A laminate comprising an inorganic fiber blanket according to any one of [1] to [4] and a substrate.

[6] The laminate described in [5], wherein the substrate is a metal substrate.

[7] The laminate described in [6], wherein the metal is aluminum, an aluminum alloy, magnesium, a magnesium alloy, titanium, a titanium alloy, iron, or stainless steel.

[8] A laminate described in any of [5] to [7], used as a battery pack cover.

[9] A battery pack unit having an inorganic fiber blanket described in any one of [1] to [4].

[10] A battery pack unit having the laminate described in [8] and a battery pack, wherein the inorganic fiber blanket of the laminate is arranged on the battery pack side.

[11] A battery pack unit having the laminate described in [8] and a battery pack, wherein the base material of the laminate is positioned on the battery pack side relative to the inorganic fiber blanket.

[12] An electric mobility device equipped with any of the battery pack units [9] to [11].

### Advantageous Effects of Invention

The inorganic fiber blanket used in the present invention has a small basis weight and a high bulk density, and therefore has excellent flame-blocking properties even when it is thin.

Therefore, a battery cover equipped with this inorganic fiber blanket has excellent flame-blocking properties.

### Brief Description of Drawings

FIG. 1 is a schematic cross-sectional view of a battery pack unit.
FIG. 2 is a schematic cross-sectional view of a battery pack unit, in which a top cover portion and a box portion for storing a battery pack are separated from each other in comparison with FIG. 1 .
FIG. 3 is an explanatory diagram of a peel test method.
FIG.4 is an explanatory diagram of a peel test method.
FIG.5 is an explanatory diagram of needling.

### Description of Embodiments

### [Inorganic fiber blanket]

The inorganic fiber blanket of the present invention has a basis weight of 700 g/m² or less and a bulk density of 0.125 g/cm³ or more.

The inorganic fiber blanket may be a nonwoven fabric or a woven fabric, so long as it is a blanket-like (sheet-like) fiber having a predetermined thickness.

The basis weight (mass per unit area) of the inorganic fiber blanket is 700 g/m² or less, preferably 650 g/m² or less, and particularly preferably 600 g/m² or less. By setting the basis weight within the above range, the thickness range of the inorganic fiber blanket can be restricted, and it can be accommodated in a limited space.

This is also preferable from the viewpoint of reducing the vehicle weight.

The basis weight of the inorganic fiber blanket is preferably 300 g/m² or more, more preferably 400 g/m² or more, and even more preferably 500 g/m² or more. If the basis weight is within the above range, the flame-shielding performance can be further improved in terms of the amount of fibers per unit area.

The bulk density of the inorganic fiber blanket is 0.125 g/cm³ or more, preferably 0.130 g/cm³ or more.

There is no upper limit to the bulk density, but it is preferably 0.200 g/cm³ or less, and particularly preferably 0.150 g/cm³ or less.

If the bulk density is 0.125 g/cm³ or more, the amount of fiber per unit volume is sufficient to provide flame-blocking performance and wind pressure resistance against explosions caused by thermal runaway of the battery pack.

The thickness of the inorganic fiber blanket (measured by the method described in the Examples below) is preferably 0.1 mm or more, more preferably 1.0 mm or more, and particularly preferably 2.0 mm or more.

The inorganic fiber blanket has a thickness of preferably 5.0 mm or less, more preferably 4.0 mm or less, and particularly preferably 3.0 mm or less.

The basis weight and thickness of the inorganic fiber blanket can be set within the above range by adjusting the amount of fiber per unit area when the inorganic fiber aggregates constituting the inorganic fiber blanket are stacked by a folding device.

The inorganic fibers constituting the inorganic fiber blanket are not particularly limited, and examples thereof include single or composite fibers of silica, alumina/silica, zirconia containing these, spinel, titania, and the like.

The inorganic fibers are preferably alumina/silica-based fibers, particularly preferably crystalline alumina/silica-based fibers.

The alumina/silica composition ratio (mass ratio) of the alumina/silica fiber is preferably in the range of 60-95/40-5, more preferably 70-84/30-16, and particularly preferably 70-76/30-24.

The inorganic fibers preferably have an average fiber length of 1.0 mm or more, more preferably 2.0 mm or more, and even more preferably 3.0 mm or more. The average fiber length is preferably 3.0×10³ mm or less, more preferably 1.0×10³ mm or less.

The inorganic fibers preferably have an average fiber diameter of 3 to 10 µm, and more preferably 5 to 8 µm.

If the average fiber length and average fiber diameter of the inorganic fibers are within this range, the inorganic fiber blanket will have high tensile strength, which is preferable.

Furthermore, it is preferable that the average fiber length and average fiber diameter of the inorganic fibers are within the above ranges, since this makes it possible to suppress the amount of dust suspended in the air.

The average fiber length of the inorganic fibers is an average value measured for 300 fibers by observation under a microscope.

The average fiber diameter is the average value of 100 fibers measured by observation under a microscope.

The inorganic fiber blanket of the present invention can be obtained by various methods, for example, a papermaking method or a needling method.

The inorganic fiber blanket is preferably a needle blanket that has been subjected to a needling treatment.

By carrying out the needling treatment, needle penetration marks that penetrate from one surface to the other surface are formed in the inorganic fiber blanket. The surface perpendicular to the thickness direction of the inorganic fiber blanket may hereinafter be referred to as the matte surface. Furthermore, the side surface (surface in the thickness direction) perpendicular to the matte surface of the inorganic fiber blanket is sometimes referred to as an end surface. That is, the inorganic fiber blanket in the first aspect of the present invention is an inorganic fiber blanket including a needle blanket having a basis weight of 700 g/m² or less and a bulk density of 0.125 g/cm³ or more.

### <Needle penetration mark density>

When visible light is shone on the matte surface of the inorganic fiber blanket, the amount of light transmitted through the needle penetration marks is greater than the amount of light transmitted through areas other than the needle penetration marks, and the transmitted light is observed as light spots on the peeled surface.

The number of needle penetration marks can be found by counting the number of light spots caused by transmission through the peeled surface.

The number of needle penetration marks per unit area (1 cm²) of the matte surface of the inorganic fiber blanket (needle penetration mark density) is preferably 35/cm² or less, more preferably 32/cm² or less, as an average value over the entire matte surface.

Setting the number of needle penetration marks within the above range is preferable from the viewpoints that it is possible to provide wind pressure resistance against explosions caused by thermal runaway of the battery pack, and also to control the thickness within a range that allows insertion between the battery pack and the substrate.

In the present invention, the number of needle penetration marks per unit area (1 cm²) of the matte surface of the inorganic fiber blanket (needle penetration mark density) is preferably 5/ cm² or more, more preferably 6/cm² or more, as an average value over the entire matte surface.

If the number of needle penetration marks is within the above range, the interlayer peel strength and tensile strength of the entire mat are improved in terms of the amount of fiber restraint by the warp threads, and the flame blocking performance can be improved.

The inorganic fiber blanket in the second aspect of the present invention is an inorganic fiber blanket having a basis weight of 700 g/m² or less and a bulk density of 0.125 g/cm³ or more, and which is not penetrated by the laminate for 5 minutes in a flame test at a flame temperature of 1000°C and an air jet speed of 100 m/s.

### <Peel strength>

The inorganic fiber blanket of the present invention preferably has a peel strength, determined as a load peak (N) in the peel test described below, of 4.0 N or more, more preferably 5.0 N or more, and particularly preferably 6.0 N or more.

The higher the peel strength of the inorganic fiber blanket, the more advantageous it is.

A peel strength of 4.0 N or more is preferable in terms of providing wind pressure resistance against an explosion due to thermal runaway of the battery pack.

Furthermore, when the battery pack cover is attached to the base material using an adhesive, peeling is unlikely to occur at the surface layer, and adhesion can be maintained without the battery pack falling off the base material while driving.

### <Peel test>

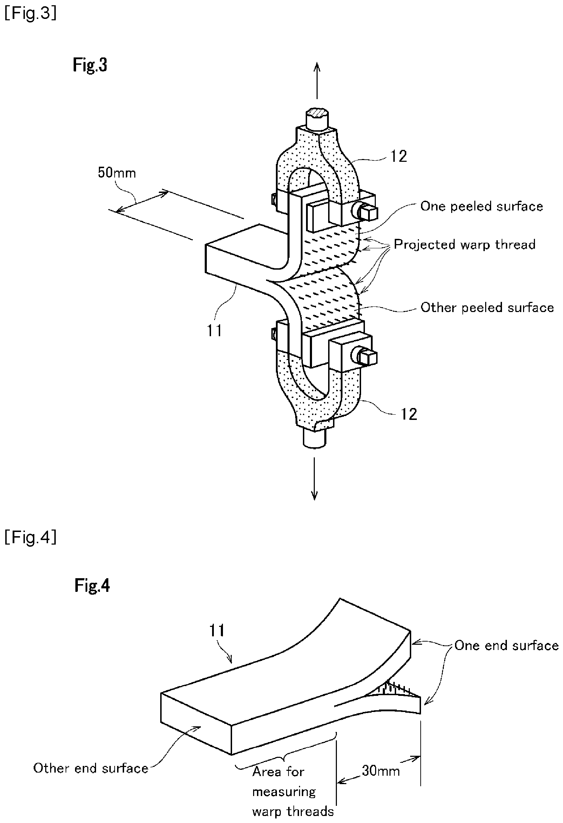

A 50 mm × 75 mm test piece is cut out from an inorganic fiber blanket, and a 25 mm deep notch is made in the center of the thickness of one longitudinal end face of this test piece 11 as shown in Figures 3 and 4. Both ends formed by the notch are supported by gripping jig 12, and then it is set in a tensile testing machine and pulled in opposite directions perpendicular to the mat surface at a speed of 100 mm/min. The maximum load is defined as the peel strength.

### <Tensile strength>

The inorganic fiber blanket preferably has a tensile strength of 20 N or more, preferably 25 N or more, and particularly preferably 30 N or more.

The tensile strength of the inorganic fiber blanket is preferably as high as possible, and there is no upper limit, but it is preferably 100 kN or less, and particularly preferably 50 kN or less.

The tensile strength is a value measured by the method described in the Examples section below.

### [Method of manufacturing inorganic fiber blanket]

Inorganic fiber blankets can be obtained by various methods, for example, they can be manufactured by the papermaking method or the needling method. In the papermaking method, inorganic fibers are opened, and the opened inorganic fibers are dispersed in a solvent to obtain a mixed liquid. The solvent is removed from the mixed liquid, and the mixture is dried to obtain a papermaking mat.

In the case of the needling method, the production can be carried out, for example, by the following method.

### [Method of manufacturing a needled blanket]

A needled blanket can be manufactured by a method including a step of obtaining a mat-like aggregate of inorganic fiber precursors by a sol-gel process, a step of subjecting the obtained mat-like aggregate (accumulation) of inorganic fiber precursors to a needling process, and a firing step of firing the needled mat-like aggregate of inorganic fiber precursors to form an inorganic fiber blanket.

However, the needle blanket may be manufactured by other methods.

An example of a method for producing an inorganic fiber blanket subjected to a needling treatment will be described below by taking as an example a method for producing an alumina/silica-based fiber blanket. However, the inorganic fiber blanket of the present invention is not limited to an alumina/silica-based fiber blanket and may be a blanket made of silica, zirconia, spinel, titania or composite fibers thereof, as described above.

### <Spinning process>

To produce a mat-like aggregate of alumina/silica-based fibers by the sol-gel method, first a spinning solution containing basic aluminum chloride, a silicon compound, an organic polymer as a thickener, and water is spun by a blowing method to obtain an aggregate of alumina/silica fiber precursors.

### «Preparation of spinning solution»

Basic aluminum chloride; Al(OH)₃₋ₓClₓ can be prepared, for example, by dissolving metallic aluminum in hydrochloric acid or an aqueous aluminum chloride solution.

The value of x in the above chemical formula is usually 0.45 to 0.54, preferably 0.5 to 0.53.

As the silicon compound, silica sol is preferably used, but other water-soluble silicon compounds such as tetraethyl silicate and water-soluble siloxane derivatives can also be used.

As the organic polymer, for example, a water-soluble polymer compound such as polyvinyl alcohol, polyethylene glycol, polyacrylamide, etc. is preferably used. The degree of polymerization of these is usually 1,000 to 3,000.

The spinning solution preferably has a ratio of aluminum derived from the basic aluminum chloride to silicon derived from the silicon compound, calculated as a mass ratio of Al₂O₃ and SiO₂, of usually 99:1 to 65:35, and preferably 99:1 to 70:30, an aluminum concentration of 150 to 210 g/L, and an organic polymer concentration of 15 to 50 g/L.

If the amount of the silicon compound in the spinning solution is less than the above range, the alumina constituting the short fibers tends to become α-alumina, and the short fibers tend to become embrittled due to the coarsening of the alumina particles.

On the other hand, if the amount of silicon compound in the spinning solution is greater than the above range, the amount of silica (SiO₂) produced together with mullite (3Al₂O₃·2SiO₂) increases, and heat resistance tends to decrease.

When the aluminum concentration in the spinning solution is less than 150 g/L or the organic polymer concentration is less than 15 g/L, the spinning solution cannot have an appropriate viscosity, and the fiber diameter of the resulting alumina/silica-based fibers is small.

That is, as a result of the excessive amount of free water in the spinning solution, the drying rate during spinning by the blowing method is slow, drawing proceeds excessively, and the fiber diameter of the spun precursor fiber changes, making it impossible to obtain short fibers having a predetermined average fiber diameter and a sharp fiber diameter distribution.

Moreover, if the aluminum concentration is less than 150 g/L, productivity decreases. On the other hand, when the aluminum concentration exceeds 210 g/L or the organic polymer concentration exceeds 50 g/L, the viscosity is too high to form a spinning solution. The preferred concentration of aluminum in the spinning solution is 160 to 200 g/L, and the preferred concentration of the organic polymer is 20 to 40 g/L.

The above spinning solution is prepared by adding a silicon compound and an organic polymer to an aqueous solution of basic aluminum chloride in amounts that achieve the above-mentioned Al₂O₃:SiO₂ ratio, and concentrating the solution so that the concentrations of aluminum and the organic polymer are within the above-mentioned ranges.

Blowing: Spinning (converting the spinning solution into fibers) is usually carried out by the blowing method, in which the spinning solution is supplied into a high-speed spinning air stream, thereby producing an alumina short fiber precursor.

The structure of the spinning nozzle used in the above spinning is not particularly limited, but a structure such as that described in Japanese Patent No. 2602460, in which the air flow blown out from the air nozzle and the spinning solution flow pushed out from the spinning solution supply nozzle are parallel flows, and the parallel air flows are sufficiently straightened to come into contact with the spinning solution, is preferred.

In spinning, it is preferable that first, a fiber is sufficiently drawn from the spinning solution under conditions in which evaporation of water and decomposition of the spinning solution are suppressed, and then the fiber is promptly dried.

For this purpose, it is preferable to change the atmosphere from a state that suppresses water evaporation to a state that promotes water evaporation during the process in which fibers are formed from the spinning solution and reach the fiber collector.

The alumina/silica-based fiber precursor can be collected and accumulated by an accumulation device configured to place an endless belt made of wire mesh at approximately right angles to the spinning airflow, rotate the endless belt, and collide the spinning airflow containing the alumina/silica-based fiber precursor with it, and recovered as a continuous sheet-like accumulation (thin sheet) of the alumina/silica-based fiber precursor.

The basis weight of this thin sheet is preferably about 10 to 300 g/m², and particularly preferably about 30 to 200 g/m² , but is not limited thereto.

The thin sheets collected from the above-mentioned collecting device can be further laminated.

Specifically, for example, a stack of inorganic fiber precursors (thin sheet) can be continuously pulled out and fed to a folding device, where it is folded to a predetermined width and stacked while being continuously moved in a direction perpendicular to the folding direction to form a laminated stack of inorganic fiber precursors (laminate sheet).

By stacking the thin sheets in this manner, the basis weight (weight per unit area) of the laminated sheet becomes uniform over the entire sheet.

As the folding device, the one described in Japanese Patent Application Laid-Open No. 2000-80547 can be used.

### <Needling aid or antifriction agent application process>

A needling aid or antifriction agent is applied, as necessary, to the sheet surface of the thin layer sheet or laminated sheet of alumina/silica-based inorganic fiber precursor obtained by spinning.

A needling aid or anti-friction agent is preferably applied to both sheet surfaces.

The needling aid is not particularly limited as long as it has the effect of strengthening the threads near the matte surface of the inorganic fiber precursor aggregate, and various coating agents, for example, acrylic polymer coating agents, can be used.

As the antifriction agent, a surfactant or emulsion that acts to reduce friction between the needle and the fiber can be used.

The needling aid or antifriction agent is applied by applying a solution or dispersion (wet coating).

### <Needling process>

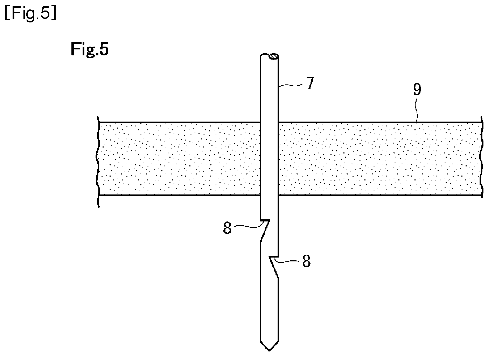

A needling aid and/or antifriction agent is added to the laminated sheet of alumina/silica-based inorganic fiber precursor obtained by spinning, as necessary, and then a needling process is performed in which a needle 7 having a barb 8 is inserted into and removed from the laminated sheet 9, as shown in Figure 5.

The needling treatment may be performed from only one side of the laminated sheet, or from both sides.

Preferably, it is applied from both sides.

As shown in FIG. 5, it is preferable that the needles 7 are inserted into and withdrawn from the laminated sheet 9 in a direction perpendicular to the sheet surface.

The needles are preferably inserted so as to penetrate the laminated sheet in the thickness direction.

In this manner, needle penetration marks are formed in the inorganic fiber blanket by the needling treatment.

That is, when a needling process is performed in which needles with barbs are pierced through a laminated sheet, at least some of the fibers are caused to extend substantially in the thickness direction by the needles at the locations where the needles are pierced through the laminated sheet.

This results in needle penetration marks being formed on the surface of the inorganic fiber blanket. Inside the inorganic fiber blanket that has been subjected to the needling treatment, the inorganic fiber threads extending substantially in the thickness direction are called warp threads.

The needling treatment is carried out in order to adjust the bulk density and peel strength of the inorganic fiber blanket by forming warp threads.

### <Firing process>

The inorganic fiber blanket is preferably a sintered body obtained by firing an inorganic fiber precursor that has been subjected to a needling treatment.

The firing is usually carried out at a temperature of 900°C or higher, preferably 1000 to 1300°C.

A firing temperature of 900° C or higher is preferable because it allows sufficient crystallization to proceed, resulting in alumina/silica fibers with excellent strength. Furthermore, if the firing temperature is 1300° C or lower, the grain growth of the crystals in the fibers does not proceed too much, and alumina/silica-based fibers having appropriate strength can be obtained, which is preferable.

The laminate of the present invention has an inorganic fiber blanket and a substrate.

The inorganic fiber blanket and the substrate may simply be stacked on top of each other, or may be bonded to each other with an adhesive or the like. The laminate of the present invention is preferably used as a battery pack cover that covers a battery pack.

### [Substrate]

There are no limitations on the substrate to be laminated with the inorganic fiber blanket, and housing materials such as metal substrates and reinforced resin substrates can be used.

From the viewpoint of flame resistance, metal substrates are preferred, and aluminum, aluminum alloys, magnesium, magnesium alloys, titanium, titanium alloys, iron, stainless steel, and the like are suitable. If the laminate of the present invention has excellent flame resistance, it is suitable for use as a battery pack cover and is therefore preferable.

### [Battery Pack Unit]

The battery pack unit of the present invention comprises a battery pack and a battery pack cover having an inorganic fiber blanket.

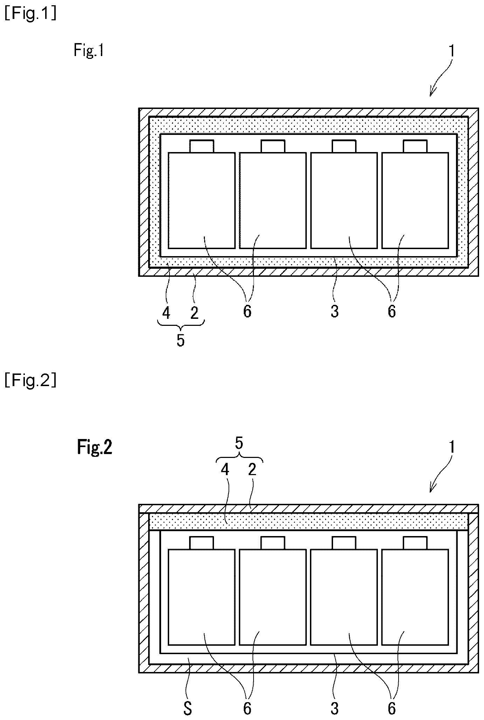

Figs.1 and 2 are schematic cross-sectional views showing an example of a battery pack unit. This battery pack unit 1 is a base material (in a battery pack cover application, it may be referred to as a battery pack cover base material. ) 2, a battery pack 3 disposed within the substrate 2, and an inorganic fiber blanket 4 disposed between the battery pack 3 and the substrate 2. The inorganic fiber blanket 4 and the substrate 2 are overlapped to form a battery pack cover 5 . The two may be bonded together by an adhesive. The inorganic fiber blanket 4 is disposed inside the battery pack unit 1 relative to the substrate 2 , but may be disposed outside the substrate 2 . The battery pack 3 includes a plurality of battery modules 6 or a plurality of individual battery cells 6 . The inorganic fiber blanket 4 may be disposed so as to cover the entire surface of the pack 3, or may be disposed only on a part of the surface. When it is disposed on a portion, the location where it is disposed is not limited and it may be on the top surface, bottom surface, or side surface, or on a combination of these.

FIG. 1 shows a state in which the battery pack cover 5 covers the entire surface of the battery pack 3 .

FIG. 2 shows an embodiment in which the battery pack cover 5 is disposed on only a portion of the upper surface of the battery pack 3 . In this embodiment, the battery module 6 or the battery cell unit 6 is disposed at a vent portion (outlet). In addition, the battery pack cover base material 2 and the portion S for storing the battery pack in FIG. 2 are separated.

This battery pack unit 1 can improve the flame-blocking properties of the battery pack cover without compromising loading capacity, and is therefore suitable for use in batteries for electric mobility such as electric cars, electric motorcycles, and ships.

The battery is not limited to any particular type, and examples of the battery include secondary batteries such as lithium ion batteries, nickel-metal hydride batteries, lithium-sulfur batteries, nickel-cadmium batteries, nickel-iron batteries, nickel-zinc batteries, sodium-sulfur batteries, lead-acid batteries, air batteries, and solid-state batteries. Of these, a lithium ion battery is preferred.

### Examples

### [Example 1 ]

### <Production of inorganic fiber blanket >

Silica sol was added to an aqueous solution of basic aluminum chloride (aluminum content 165 g/L, Al/Cl = 1.8 (atomic ratio)) so that the final composition of the alumina fiber obtained was Al₂O₃:SiO₂ = 72:28 (mass ratio). Polyvinyl alcohol was then added and the mixture was concentrated to prepare a spinning solution with a viscosity of 70 poise (25°C) and an alumina/silica content of approximately 35 mass%.

The above spinning solution was spun by a blowing method.

The spinning nozzle used was a spinning nozzle having a structure similar to that shown in FIG. 6 of Japanese Patent No. 2602460.

In addition, when collecting the cotton, an endless belt made of wire mesh was placed approximately perpendicular to the spinning airflow, and the cotton was collected as a continuous sheet (thin sheet) using a collection device configured to collide the spinning airflow containing the alumina/silica-based fiber precursor with the endless belt while rotating.

The thin sheets collected from the stacking device were sprayed with a lubricant, and then continuously pulled out and fed to a folding device, where they were folded to a specified width and stacked while being continuously moved in a direction perpendicular to the folding direction to form a laminated sheet.

As the folding device, a folding device having a structure similar to that described in Japanese Patent Application Laid-Open No. 2000-80547 was used.

The basis weight can be changed by changing the number of times the fiber precursor is folded by the stacking device.

The mat-like aggregate of the alumina/silica-based fiber precursor obtained by spinning was subjected to a needling treatment using a needle 7 as shown in FIG.

The needling treatment was carried out by punching using a needle punching machine.

Needling treatment was performed on both sides. When the needling process was applied to the laminated sheet 9 of inorganic fiber precursor, the needling was performed so that the needles penetrated from one side to the other side, and the needling process was performed so that a predetermined needle penetration mark density was achieved after firing, and an average of five barbs 8 per needle penetrated the other side.

This was then fired at 1200°C to obtain an inorganic fiber blanket 1 made of crystalline alumina/silica-based fibers with a basis weight of 600 g/m² (thickness 4.0 mm, bulk density 0.15 g/cm³) and a needle penetration mark density of 30.2 pieces/cm².

The firing was performed in an electric furnace by increasing the temperature to 1200° C. at a rate of 5° C./min, holding at 1200° C. for 30 minutes, and then naturally cooling.

The composition ratio of this crystalline alumina/silica-based fiber was alumina/silica = 72/28 (mass ratio), and the average fiber diameter of the crystalline alumina/silica-based fiber (average value of 100 fibers) was 5.5 µm as measured by observing the inorganic fiber blanket with a microscope.

### [Example 2]

An inorganic fiber blanket made of crystalline alumina/silica-based fibers was obtained in the same manner as in Example 1, except that needling and sintering were performed so that the needle penetration mark density was 13.7/cm², and the blanket had a basis weight of 600 g/m², a thickness of 4.3 mm, and a bulk density of 0.140 g/cm³.

### [Example 3]

An inorganic fiber blanket made of crystalline alumina/silica-based fibers was obtained in the same manner as in Example 1, except that needling and sintering were performed so that the needle penetration mark density was 40.3/cm², and the blanket had a basis weight of 600 g/m², a thickness of 4.1 mm, and a bulk density of 0.146 g/cm³.

### [Example 4]

In the needling process of Example 1, needling and firing were carried out so that an average of four barbs penetrated the other side, resulting in a basis weight of 600 g/m², a thickness of 4.0 mm, and a bulk density of 0.150 g/cm³. An inorganic fiber blanket composed of crystalline alumina/silica-based fibers was obtained in the same manner as in Example 1, except that the needling process and firing were carried out so that an average of four barbs penetrated the other side, resulting in a basis weight of 600 g/m², a thickness of 4.0 mm, and a bulk density of 0.150 g/cm³.

### [Example 5]

An inorganic fiber blanket made of crystalline alumina/silica-based fibers was obtained in the same manner as in Example 1, except that the number of layers was changed, needling treatment was performed, and firing was performed so that the needle penetration mark density was 30.2/cm², the basis weight was 700 g/m², and the thickness was 4.5 mm and the bulk density was 0.156 g/cm³.

### [Example 6]

An inorganic fiber blanket made of crystalline alumina/silica-based fibers was obtained in the same manner as in Example 1, except that the number of layers was changed, needling treatment was performed, and firing was performed so that the needle penetration mark density was 30.2/cm², the basis weight was 500 g/m², and the thickness was 3.7 mm and the bulk density was 0.135 g/cm³.

### [Comparative Example 1]

In the needling process of Example 1, the needles were pierced so that the number of barbs penetrating to the other side was one per needle on average, and the needle penetration mark density was 6.8 barbs/cm². An inorganic fiber blanket made of crystalline alumina/silica-based fibers was obtained in the same manner as in Example 1, except that the needling process and firing were performed so that the basis weight was 600 g/m², the thickness was 5.3 mm, and the bulk density was 0.113 g/cm³.

### «Measurement of physical properties of inorganic fiber blanket»

For each of the inorganic fiber blankets obtained in the above examples and comparative examples, the peel strength and needle penetration mark density were measured using the methods described above, and tensile strength and thickness were measured and a flame test was performed as follows.

The results are shown in Table 1.

### -Method for measuring peel strength: Measured using a tensile tester.

The size of the effective part of the test piece was 50 × 75 mm, and a cut was made in the thickness center of one end on the 50 mm width side up to 25 mm in the longitudinal direction, and both ends formed by the cut were grasped and attached to a tensile tester, and pulled at a speed of 100 mm/min. The maximum load was defined as the peel strength.

### -Tensile strength measurement test method: Measurements were performed using a tensile testing machine.

The size of the parallel portion (effective portion) of the test piece is 25 mm × 100 mm, and the overall size is 25 mm × 160 mm.

Each inorganic fiber blanket in the finished state was cut to the above size using a punching die, attached to a tensile tester, and pulled at a speed of 25 mm/min. The maximum load was defined as the tensile strength.

### -Thickness measurement method: Measured using a digital dial gauge.

The measurement load is 4.9 kPa (50 g/cm²), and the minimum measurement scale is 0.01 mm.

A test piece was cut out by the method described in the flame test method described below, and the thickness was measured at five random points using the measuring tool, and the average value of the five points was used as the representative value of the measurements.

### -Flame test method: The inorganic fiber blankets of Examples 1 to 6 and Comparative Example 1 were cut into pieces measuring 3,600 mm² using a punching die.

The cut-out inorganic fiber blanket was layered with each aluminum alloy plate (3600 mm², thickness 0.8 mm) to prepare a test piece, and the following flame test was carried out.

The test piece was clamped and fixed in a stainless steel jig, and placed at a position 70 mm away from the tip of the torch burner.

The test specimen was placed so that the inorganic fiber blanket side faced the burner and the matte surface of the inorganic fiber blanket was approximately perpendicular to the axial direction of the burner.

A flame was supplied to this torch burner (Sakaguchi Seisakusho: WT-01, nozzle diameter 1.2 mm) for 30 minutes at O₂ 0.50 MPa, C₂H₂ 0.02 MPa, and an air pressure of 0.24 MPa from the air nozzle (discharge nozzle diameter 3.0 mm, positioned 40 mm away from the test specimen, with the mat surface of the inorganic fiber blanket approximately perpendicular to the axial direction of the air nozzle). A flame with a temperature of 1000°C and air with a speed of 100 m/s were sprayed toward the test specimen for 10 seconds every 2 minutes, a maximum of 15 times.

Thirty minutes and 30 seconds after the start of spraying the flame toward the inorganic fiber blanket of the test piece, the test piece was removed and visually inspected to see whether or not the inorganic fiber blanket had been penetrated.

If the test piece was penetrated by air (or flame) during the test, the test piece was removed at the time of penetration, and the number of air injections until the penetration was reached was defined as the flame test durability number.

**[Table 1]**

| | Basis weight [g/m²] | Number of penetrating barbs per one needle | Needle menetration mark density [piecies/cm²] | Tensile strength [N] | Peel strength [N] | Bulk density [g/cm³] | Flame test durability number | Thickness [mm] |
|---|---|---|---|---|---|---|---|---|
| Example 1 | 600 | 5 | 30.2 | 51.4 | 7.3 | 0.150 | 11 | 4.0 |
| Example 2 | 600 | 5 | 13.7 | 50.8 | 4.3 | 0.140 | 7 | 4.3 |
| Example3 | 600 | 5 | 40.3 | 46.6 | 8.5 | 0.146 | 6 | 4.1 |
| Example4 | 600 | 4 | 30.2 | 47.4 | 6.0 | 0.150 | 9 | 4.0 |
| Example 5 | 700 | 5 | 30.2 | 66.0 | 8.9 | 0.156 | 14 | 4.5 |
| Example6 | 500 | 5 | 30.2 | 36.2 | 7.4 | 0.135 | 3 | 3.7 |
| Comparative Example 1 | 600 | 1 | 6.8 | 29.4 | 2.4 | 0.113 | 1 | 5.3 |

### <Considerations>

As shown in Table 1, even though the inorganic fiber blanket of the present invention is thin, it has a high flame test durability and is excellent in flame resistance.

Although the present invention has been described in detail with reference to specific embodiments, it will be apparent to those skilled in the art that various modifications can be made without departing from the spirit and scope of the invention.

This application is based on Japanese Patent Application No. 2021-188751 filed on November 19, 2021, the entirety of which is incorporated by reference.

### Reference Sigs List

1. Battery pack unit
2. Substrate (battery pack cover substrate)
3. Battery pack
4. Inorganic fiber blanket
5. Battery pack cover
5' Battery pack cover
6. Battery module
7. Needle
8. Barb
9. Laminated sheet
11. Inorganic fiber blanket test piece
12. Gripping jig

## Claims

1. An inorganic fiber blanket comprising a needle blanket having a basis weight of 700 g/m² or less and a bulk density of 0.125 g/cm³ or more.

2. The inorganic fiber blanket according to claim 1, wherein the needle blanket has needle penetration marks penetrating from one surface to the other surface, and the density of needle penetration marks is 35/cm² or less.

3. An inorganic fiber blanket having a basis weight of 700 g/m² or less and a bulk density of 0.125 g/cm³ or more, which is not penetrated for 5 minutes in a flame test at a flame temperature of 1000°C and an air jet speed of 100 m/s, using a laminate consisting of said inorganic fiber blanket and an aluminum alloy plate having a thickness of 0.8 mm as a test piece.

4. The inorganic fiber blanket according to any one of claims 1 to 3, having a peel strength of 4.0 N or more as determined by the following method.
<Method for measuring peel strength>
Measure using a tensile testing machine. The effective size of the test piece is 50 x 75 mm. A slit is made in the center of the thickness of one end of the 50 mm width side, extending 25 mm in the longitudinal direction. Both ends formed by the cut are gripped and attached to a tensile tester, and the specimen is pulled at a speed of 100 mm/min. The maximum load is defined as the peel strength.

5. A laminate comprising the inorganic fiber blanket according to any one of claims 1 to 4 and a substrate.

6. The laminate according to claim 5 , wherein the substrate is a metal substrate.

7. The laminate according to claim 6, wherein the metal is aluminum, an aluminum alloy, magnesium, a magnesium alloy, titanium, a titanium alloy, iron, or stainless steel.

8. The laminate according to any one of claims 5 to 7, which is used as a battery pack cover.

9. A battery pack unit comprising the inorganic fiber blanket according to any one of claims 1 to 4.

10. A battery pack unit having the laminate according to claim 8 and a battery pack, wherein the inorganic fiber blanket of the laminate is disposed on the battery pack side.

11. A battery pack unit having the laminate described in claim 8 and a battery pack, wherein the base material of the laminate is arranged on the battery pack side relative to the inorganic fiber blanket.

12. An electric mobility comprising the battery pack unit according to any one of claims 9 to 11.
